# EUROPEAN PATENT APPLICATION

(11) **EP 1 079 383 A1**
(43) Date of publication of application: **28.02.2001**
(21) Application number: 00870180.7
(22) Date of filing: 16.08.2000
(51) Int. Cl.: G11B 15/68, G11B 17/22

(54) **Device for the gripping and transport of objects**

(30) Priority: 18.08.1999 BE 9900563
(71) Applicant: STAAR SOCIETE ANONYME, B-1200 Bruxelles (BE)
(72) Inventor: d'Alayer de Costemore d'Arc, Stéphane Marie André, 1474 Ways (BE)
(74) Representative: Overath, Philippe

(57) **Abstract**

A device (10) for gripping and transferring boxes (24, 26) in-between storage and delivery positions includes a support (35) bearing gripping means (36A, 36B) such as suction cups which are movable between inoperative and operative positions (levels). According to the invention, a frame (12) bears both the gripping means (36A, 36B) and the transfer means (60, 61, 62) for movement in a plane perpendicular to that of the storage of the boxes (24, 26) while the gripping means (36A, 36B) are further movable in a plane parallel to that of the transfer means (60, 61, 62) to ensure the transfer of a box (24, 26) gripped by the suction cups (36A, 36B).

The transfer means (60, 61, 62) include rollers (60, 61), linked by linkage means (62) while the position of the support (35) of the gripping means (36A, 36B) is controlled by guiding means (32).

## Description

The present invention relates to devices ensuring the gripping and transport of objects, boxes, cartridges in-between storage and delivery positions. In the text here-below, the word box is to be understood as covering any object of regular shape.

Numerous devices have been proposed, such as the one described in the EP-A-0856841 document of the assignee, but they always require that a spacing be provided, laterally as well as vertically, in-between adjacent boxes to allow gripping devices to grip the selected box without interfering with adjacent boxes. Those spacings which are just lost space, reduce the volume of the unit available for the storage of boxes, quite a drawback.

The document US 5,915,568 discloses a gripping device working-out suction cups but they can grip objects only on one face to simply lay them down on a remote conveyance device. Further this device allows the storage of objects only on one side of the conveyance device.

The aim of the present invention is thus to overcome such drawbacks by offering a gripping device doing away with the requirement of spacing in-between adjacent boxes, thus enabling to store, in a specific volume, a larger number of boxes and which is closely integrated with a transport device for handling boxes stored on both sides of the device and f.i. shifting them from one side to the opposite one.

Another aim of the invention is to propose a device which is of a reduced size.

A further aim of the invention is to propose a device which is of a low production cost, thus allowing the work-out of small production benches.

Another aim of the invention is to propose a gripping device which is simple, reliable and maintenance free.

Another aim of the invention is to propose a device which can be easily adapted to objects of different shapes, sizes.

With a view to reach those aims, the device, object of the present invention, is essentially characterized by the content of the main claim.

Other characteristics, advantages, particularities will come out from a detailed description given here-below, in a non-limiting way, of a preferred embodiment to which various improvements, modifications can be brought without departing from the scope of the invention and for which :
- figure 1 is a schematic lateral view of a unit incorporating the device object of the present invention,
- figure 2 is a schematic and partial top view of the unit shown on figure 1,
- figure 3 is similar to figure 2 but limited to the device of the invention shown at a larger scale,
- figure 4 is a front view of the gripping device of figure 3 shown in inoperative position,
- figure 4A is a detail of figure 4 showing the device at its operating level,
- figure 4B is a detail of the back lateral face of the device of figure 3,
- figure 5 is similar to figure 3, the device being in a gripping position,
- figure 6 is similar to figure 5, the device being in a gripping position opposite the one of figure 5,
- figure 7 is similar to figure 5, the device having brought the selected box in cooperation with the transfer means,
- figure 8 is similar to figure 3, the transfer means supporting a box during its transfer between storage and delivery positions.

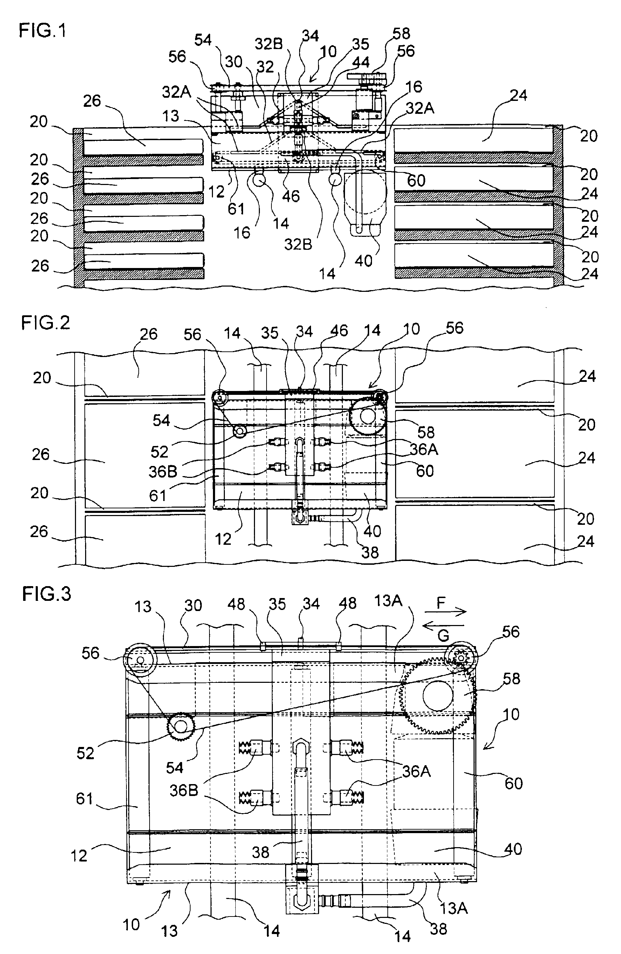

As shown on figures 1 to 4, the device 10 object of the invention is associated to a frame 12 sliding on rails 14 thanks to rollers 16. The rails 14 are supported at their extremities by support plates, not shown, which can be moved vertically. Accordingly, the device 10 can be moved in the space along X and Y axes for being positioned in front of any compartment 20, located either in front of or behind it to grip a box 24, 26 which could be stored therein or store therein a box that it would carry as described thereafter.

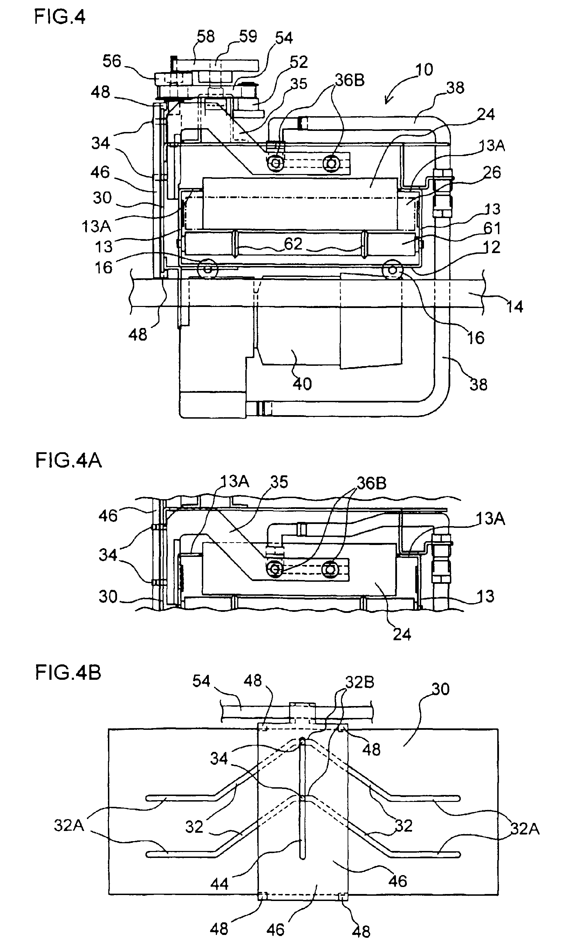

More particularly, the frame 12 has a U-shaped profile (figure 4) of which the two lateral plates 13 and their top bent parts 13A provide for two channels guiding two different profiles of boxes 24, 26 handled by the device 10. In the described embodiment and as shown on figures 1 and 2, those two profiles of boxes correspond on one hand to the profile 24 shown on the right hand side of the device 10, of VHS video cassettes and on the other hand to the profile 26, shown on the left hand side of the device, of boxes storing optical discs (CD-ROM, CD-Video, CD-Audio, Play Station,...).

Proximate one of its lateral plates 13, the frame 12 bears a plate 30 supporting guiding means 32 such as two parallel grooves, the particular profile of which guides the studs 34 of a support 35 bearing gripping means 36A, 36B, such as two pairs of suction cups, located on opposite sides and thus facing compartments 20. These pairs of suction cups 36A, 36B are connected through a flexible channel 38, preferably made of a soft material, to an air pump 40. The studs 34 engage both the grooves 32 and the vertical groove 44 of a mobile guide 46 sliding along the plate 30 against which it is maintained at its four extremities (figures 3, 4, 4B) by hooks 48. Thus the guide 46, by sliding along the plate 30 and the combination of the grooves 32, 44 by driving the studs 34 move the support 35 along the profile of the grooves 32, thus up, down to shift it in-between an operative level (figures 4A, 5, 6) when the studs 34 ride along the lower horizontal legs 32A so that the support 35 faces a box 24, 26 and an inoperative level (figures 1, 2, 4, 8) when the studs 34 are located at the top leg 32B of the grooves 32 so that the support 35 clears any box. This movement is powered by a motor (not shown) driving a time-gear 52 powering a time-belt 54 guided by two return pulleys 56, the extremities of the belt 54 being fixed on the mobile guide 46. Thus the belt 54 drives, along its direction of movement, the support 35 in the direction of the arrows F, G (figure 3).

When a box 24, 26 must be removed from a compartment 20 to be delivered, means, not shown as well-known in the art, position by movement along the X, Y axes, that is to say in a plane substantially perpendicular to that of the storage compartments 20, the device 10 in front of the selected compartment 20. Suppose for example that the box 24 is located at the right hand side of the device 10 such as shown on figures 1, 2, thus is of a VHS cassette type, then all the elements of the device are in the position shown on figures 1 to 3.

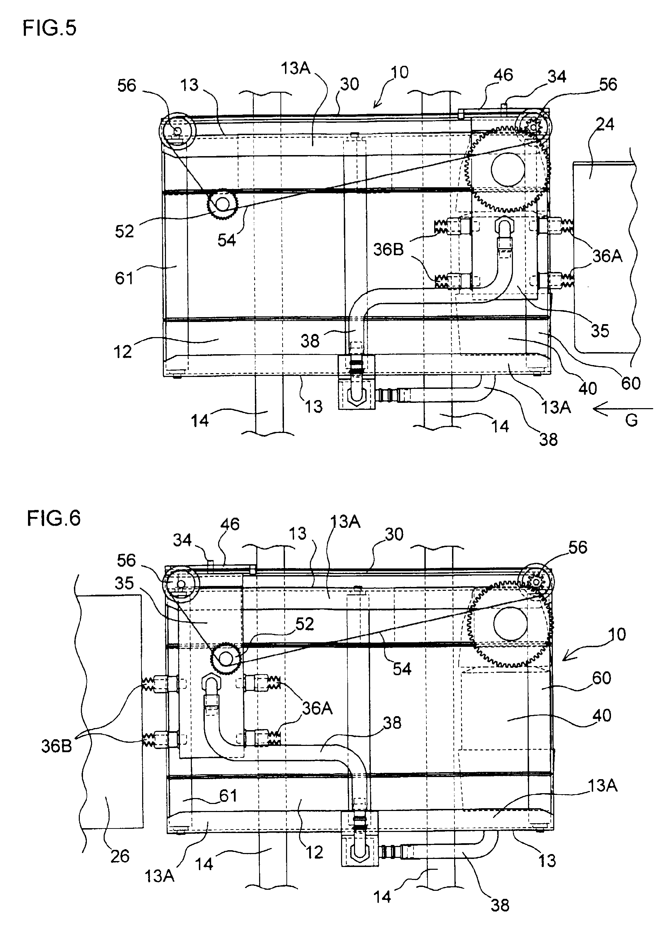

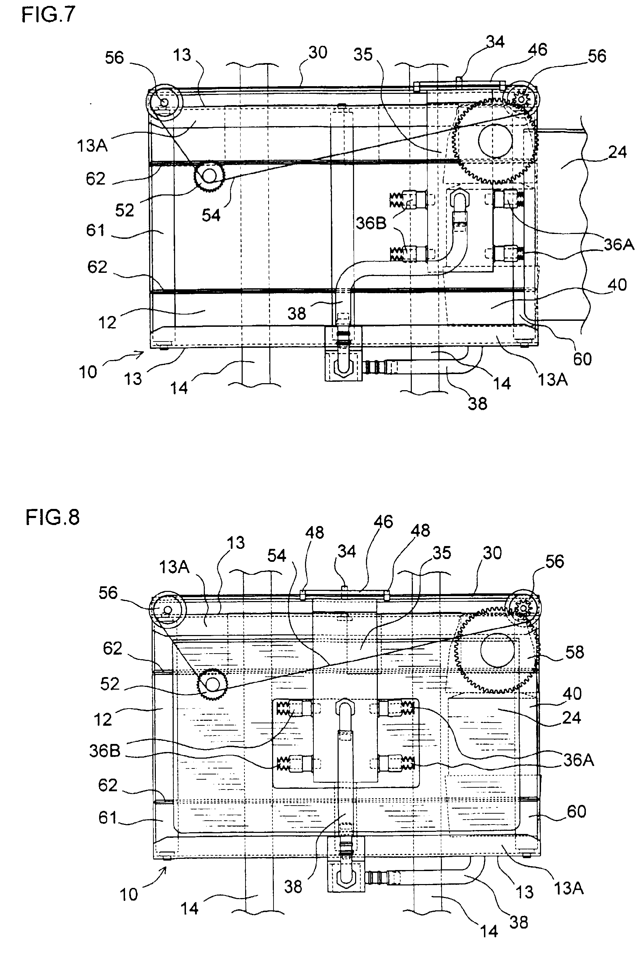

First, the belt 54 is powered to move the support 35 along the arrow F to be shifted from its non-operative position shown on figures 1 to 4 to its operative position shown on figures 4A and 5. In particular, the studs 34, by riding along the lower horizontal legs 32A of the grooves 32 drive the support 35 and more particularly the suction cups 36A (figure 5) towards the front wall of the box 24. At the end of movement, the belt 54 ensures that the suction cups are pressed against the front wall of the selected box 24 and simultaneously the air pump 40 being powered, the air within the suction cups 36A is sucked via the channel 38 to create and maintain a low pressure system. Thus the box 24 is sucked by the suction cups 36A and after the lapse of a predetermined time delay, f.i. one second, the belt 54 is driven along the arrow G. Accordingly, the box 24 which is gripped by the support 35 thanks to the low pressure system within the suction cups 36A, follows this movement until it lays partially, as shown on figure 7, on transfer means, presently a roller 60 linked to an identical roller 61 by linkage means 62 such as a pair of belts; said rollers 60, 61 being supported for rotation by the frame 12 in a plane substantially parallel to the horizontal legs 32A of the grooves 32 and aligned with the compartment from which the box 24 is removed. To ensure that the box 24 engages positively the top edge of the roller 60, the transfer means 60, 61, 62 is positioned slightly above the level of the bottom of the compartment 20. The air pump is then switched off, thus the suction cups 36A move away from the box 24 and the belt 54, while keeping its movement, drives the support 35 back to its inoperative position (figures 1, 3, 4) in which it clears the box 24; the studs 34 being then located in the top leg 32B of the grooves 32 (figure 4B).

Powered means, not shown as well-known in the art, are then actuated to drive the rollers 60, 61 and the belts 62 to ensure shifting of the box 24, in a plane substantially parallel to that of the horizontal legs 32A of the grooves 32 between the positions shown on figures 7 and 8.

As shown on figure 8, all the elements of the device 10 and the box 24 removed from the storage compartment 20 are then in a position allowing the movement of the device 10, thus the simultaneous movements of the gripping 36A, 36B and transfer 60, 61, 62 means in the space without interfering with compartments 20 and boxes 24, 26 stored therein. Then, when the device 10 is positioned in front of the delivery position, the powered means driving the transfer means 60, 61, 62 are switched on to shift the box 24 outside the device 10 and thus deliver it to the user.

The same movements/steps, as here-above described, are powered for gripping a box 26 located on the left hand side of the device 10 thanks to another pair of suction cups 36B (figure 6).

To the same extent, when a box 24 or 26 shall be returned to a compartment 20, the movements/steps here-above described are powered in the reverse order.

Notably, the user lays the box 24, 26 down on the roller 60 or 61 in front of him, the powered means driving the transfer means 60, 61, 62 are actuated to position the box 24 or 26 within the device 10 (figure 8), then the device is moved along X, Y axes to be positioned in front of the appropriate compartment 20 at a level just slightly above that of the compartment to ensure a smooth transfer of the box 24, 26, the powered means driving the transfer means 60, 61, 62 are again actuated to translate the box 24 or 26 inside the compartment 20; the belt 54 is then moved along the arrow F (figure 3) for a box 24 which must be stored in a compartment located at the right hand side of the device 10 or along the opposite arrow G for a box 26 to be stored on its left hand side in order to move the support 35 so that the pair of suction cups 36A or 36B, by pushing the front wall of the box 24 or 26, ensures its storage up to the remote end of the selected compartment 20 (figures 5, 6); in the end the belt 54 is moved in the opposite direction to drive the support 35 back to its inoperative position (figures 1 to 4, 4B).

To know instantaneously and accurately the position of the support 35, one of the return pulleys 56, in the present embodiment the one located at the right-hand side (figure 3), meshes with a geared pulley 58 the rotation of which is limited to 300° and the shaft 59 of which (figure 4) drives a rheostat. Accordingly, by measuring the value of the resistance of this component, one knows the angular position of the shaft 59, thus the linear position of the support 35.

As one can easily understand, the device object of the invention allows a great ease of use as it can grip any object of any shape, size as long as it has a front wall partially flat and made preferably of a non or low-porous material allowing use of suction cups. Further, the number, position of the suction cups 36A, 36B on the support 35 can be easily modified to match any size, shape of box, while the spacing between the belts 62 is simply adapted to the minimum width of boxes 24, 26.

On another hand, the device object of the invention is excessively simple as it has only two means - a pneumatic one (support 35 - suction cups 36A, 36B - channel 38 - pump 40) and a transfer one (rollers 60, 61 - belts 62) which are both simple, low cost, reliable and require no maintenance or supervision.

The simplicity of those elements allows manufacturing in small benches at a low cost enabling easy adaptation to very different applications.

Legend of the drawings :
- 10: device
- 12: frame
- 13: lateral plates
- 13A: top bend part of 13
- 14: rails
- 16: rollers
- 20: compartment
- 24: box
- 26: box
- 30: plate
- 32: guiding means
- 32A: lower horizontal leg
- 32B: top leg
- 34: stud
- 35: support
- 36A, 36B: gripping means
- 38: channel
- 40: air pump
- 44: vertical groove
- 46: guide
- 48: hook
- 52: time-gear
- 54: time-belt
- 56: return pulley
- 58: geared pulley
- 59: shaft
- 60: roller
- 61: roller
- 62: linkage means

## Claims

1. Gripping and transfer device (10) for handling boxes (24, 26) in-between storage and delivery positions, comprising a frame (12) bearing gripping means (36A, 36B) mounted on a support (35) movable between operative and inoperative levels to face/clear a box (24, 26) and associated to transfer means (60, 61, 62), characterized in that the transfer means (60, 61, 62) are mounted on said frame (12) for simultaneous movement with the gripping means (36A, 36B) upon movement of the frame (12) in a plane substantially perpendicular to that of the storage one.

2. Device (10) according to claim 1, characterized in that the support (35) is further movable with respect to the frame (12) in a plane parallel to that of the transfer means (60, 61, 62) to grip a box (24, 26) and lay it on said transfer means (60, 61, 62).

3. Device (10) according to claim 1 or 2, characterized in that the support (35) of the gripping means (36A, 36B) is associated to guiding means (32), the profile of which ensures the movement of said gripping means both between its operative position to grip a box (24, 26) and inoperative position to allow shifting of a box (24, 26) by the transfer means (60, 61, 62) and in the plane of said transfer means (60, 61, 62) to lay a box (24, 26) thereon.

4. Device (10) according to any of the preceding claims, characterized in that the frame (12) supporting the gripping (36A, 36B) and transfer (60, 61, 62) means has lateral plates (13), top bend parts (13A) guiding the boxes (24, 26) handled by said gripping and transfer means.

5. Device (10) according to any of the preceding claims, characterized in that the gripping means (36A, 36B) are made of suction cups located on a side of the support (35).

6. Device (10) according to claim 3, characterized in that the guiding means (32) are made of grooves, the profile of which includes a top leg (32B) and a lower horizontal leg (32A) corresponding to the inoperative, respectively operative position of the gripping means (36A, 36B).

7. Device (10) according to claim 6, characterized in that the mobile support (35) bears studs (34) engaging with both the grooves (32) and the vertical groove (44) of a mobile guide (46) the movement of which powers that of the support (35).

8. Device (10) according to claim 7, characterized in that the mobile guide (46) slides along the plate (30) supporting the guiding means (32).

9. Device (10) according to any of the preceding claims, characterized in that the transfer means (60, 61, 62) includes rollers (60, 61) linked by linkage means (62).

10. Device (10) according to claim 5, charaterized in that suction cups are located on opposite sides of the support (35) to grip/handle boxes (24, 26) stored on each side of the device (10).
